# EUROPÄISCHE PATENTSCHRIFT

(11) **EP 1 761 007 B1**
(45) Veröffentlichungstag und Bekanntmachung des Hinweises auf die Patenterteilung: **05.10.2011**
(21) Anmeldenummer: 06014991.1
(22) Anmeldetag: 19.07.2006
(51) Int. Cl.: H04M 1/725, H04M 1/247, G01C 21/36

(54) **Verfahren und mobiles Endgerät zur ortsabhängigen Anwendungsbereitstellung**
Method and mobile terminal for location dependent provisioning of applications
Procédé et terminal mobile pour la mise à disposition des applications dépendant du lieu

(30) Priorität: 31.08.2005 DE 102005041517
(43) Veröffentlichungstag der Anmeldung: 07.03.2007
(60) Teilanmeldung: 10011338.0
(73) Patentinhaber: Vodafone Holding GmbH, 40213 Düsseldorf (DE)
(72) Erfinder: Rosenberger, Frank, 40668 Meerbusch (DE)
(74) Vertreter: Weisbrodt, Bernd

(56) Entgegenhaltungen:
- WO-A-01/13069
- US-A1- 2004 048 620
- US-A1- 2004 203 909
- US-A1- 2004 266 409

## Beschreibung

Die vorliegende Erfindung betrifft ein Verfahren zum Betreiben eines in einem Mobilfunknetz nutzbaren, eine Anzeigeeinrichtung zur optischen und/oder akustischen Wiedergabe von Informationen und wenigstens eine Eingabeeinrichtung zur Erfassung von Informationen aufweisenden mobilen Endgerätes, wobei seitens der Anzeigeeinrichtung Nutzungs- und/oder Bedienmöglichkeiten endgeräteseitig zur Verfügung stehender Funktionen und/oder Anwendungen als Informationen wiedergegeben werden.

Ferner betrifft die vorliegende Erfindung ein mobiles Endgerät zur Nutzung in einem Mobilfunknetz, mit einer Anzeigeeinrichtung zur optischen und/oder akustischen Wiedergabe von Informationen und wenigstens einer Eingabeeinrichtung zur Erfassung von Informationen, wobei seitens der Anzeigeeinrichtung Nutzungs- und/oder Bedienmöglichkeiten endgeräteseitig zur Verfügung stehender Funktionen und/oder Anwendungen als Informationen wiedergebbar sind, welches zur Ausführung eines erfindungsgemäßen Verfahrens ausgebildet ist.

Derartige Verfahren und mobile Endgeräte sind im Stand der Technik bekannt, siehe z.B. US-A-2004/048620 und ermöglichen eine menügeführte Nutzung von entsprechend in Mobilfunknetzen und/oder seitens mobiler Endgeräte zur Verfügung stehender Funktionen und/oder Anwendungen, insbesondere zur Nutzung von seitens des Mobilfunknetzes bereitgestellten beziehungsweise verfügbaren Diensten für Kommunikationsverbindungen. Dabei ist die durch Wiedergabe von Nutzungs- und/oder Bedienmöglichkeiten von endgeräteseitig zur Verfügung stehender Funktionen und/oder Anwendungen gegebene Menüführung für entsprechende Funktionen und/oder Anwendungen mitunter derart umfangreich und schwer beziehungsweise umständlich nutzbar, dass nutzerseitig von einem Gebrauch entsprechender Funktionen und/oder Anwendungen abgesehen wird beziehungsweise ein solcher nur unzureichend und eingeschränkt erfolgt.

Darüber hinaus ist ein fortwährender Bedarf an nutzerindividualisierbaren Menüführungen gegeben, dem die bisher im Stand der Technik bekannten Wiedergaben von Nutzungs- und/oder Bedienmöglichkeiten endgeräteseitig zur Verfügung stehender Funktionen und/oder Anwendungen seitens einer Anzeigeeinrichtung eines mobilen Endgerätes nicht beziehungsweise nur beschränkt nachkommen.

Der vorliegenden Erfindung liegt in Anbetracht dieses Standes der Technik die Aufgabe zugrunde, dem fortwährenden Bedarf an einfachen und nutzerindividualisierbaren Menüführungen für endgeräteseitig zur Verfügung stehender Funktionen und/oder Anwendungen von in Mobilfunknetzen nutzbaren mobilen Endgeräten nachkommen zu können.

Zur technischen Lösung dieser Aufgabe wird ein Verfahren entsprechend Anspruch 1 zum Betreiben eines in einem Mobilfunknetz nutzbaren, eine Anzeigeeinrichtung zur optischen und/oder akustischen Wiedergabe von Informationen und wenigstens eine Eingabeeinrichtung zur Erfassung von Informationen aufweisenden mobilen Endgerätes, wobei seitens der Anzeigeeinrichtung Nutzungs- und/oder Bedienmöglichkeiten endgeräteseitig zur Verfügung stehender Funktionen und/oder Anwendungen als Informationen wiedergegeben werden, vorgeschlagen, bei welchem zumindest ein Teil der Nutzungs- und/oder Bedienmöglichkeiten zur Verfügung stehender Funktionen und/oder Anwendungen seitens der Anzeigeinrichtung in Abhängigkeit von dem Aufenthaltsort des mobilen Endgerätes im Mobilfunknetz wiedergegeben werden.

Der Erfindung liegt die Erkenntnis zugrunde, dass sich durch aufenthaltsortsabhängige Wiedergabe von Nutzungs- und/oder Bedienmöglichkeiten zur Verfügung stehender Funktionen und/oder Anwendungen seitens der Anzeigeeinrichtung des mobilen Endgerätes das Maß einfacher und nutzerindividualisierbarer Menüführungen für endgeräteseitig zur Verfügung stehender Funktionen und/oder Anwendungen steigern lässt. Durch die aufenthaltsortsabhängige Wiedergabe von Nutzungs- und/oder Bedienmöglichkeiten von endgeräteseitig zur Verfügung stehenden Funktionen und/oder Anwendungen wird dabei die Menüführung sowohl vereinfacht als auch durch den jeweiligen Aufenthaltsort des jeweiligen Nutzers individualisiert. Eine Vereinfachung der Menüführung ist dabei insbesondere aufgrund einer aufenthaltsortsabhängigen Wiedergabe der am jeweiligen Aufenthaltsort zur Verfügung stehenden Nutzungs- und/oder Bedienmöglichkeiten von zur Verfügung stehenden Funktionen und/der Anwendungen gegeben, die quasi eine Art Filterung der zur Verfügung stehenden Nutzungs- und/oder Bedienmöglichkeiten von zur Verfügung stehenden Funktionen und/der Anwendungen vornimmt.

Vorteilhafterweise wird wenigstens eine Funktion und/oder Anwendung in Abhängigkeit von dem Aufenthaltsort des mobilen Endgerätes im Mobilfunknetz zur Verfügung gestellt. Erfindungsgemäß werden so neben Nutzungs- und/oder Bedienmöglichkeiten von endgeräteseitig zur Verfügung stehenden Funktionen und/oder Anwendungen die Funktionen und/oder Anwendungen selbst aufenthaltsortsabhängig wiedergegeben. Dadurch ist das Maß der Nutzerindividualisierbarkeit und der Einfachheit von Menüführungen weiter steigerbar, insbesondere da am jeweiligen Aufenthaltsort nicht zur Verfügung stehende Funktionen und/oder Anwendungen im Rahmen einer Menüführung entsprechend nicht wiedergegeben beziehungsweise quasi rausgefiltert werden.

Der Aufenthaltsort des mobilen Endgerätes im Mobilfunknetz wird seitens der Anzeigeeinrichtung vorteilhafterweise optisch wiedergegeben. Gemäß einer weiteren vorteilhaften Ausgestaltung der Erfindung wird der Aufenthaltsort in Form einer geographische Informationen des Aufenthaltsortes und/oder der Umgebung beziehungsweise des Umfeldes des Aufenthaltsortes aufweisenden Karte wiedergegeben. Eine entsprechende erfindungsgemäße Wiedergabe der Nutzungs- und/oder Bedienmöglichkeiten von endgeräteseitig zur Verfügung stehenden Funktionen und/oder Anwendungen und/oder von endgeräteseitig zur Verfügung stehenden Funktionen und/oder Anwendungen selbst in Form einer geographischen Karte wird die entsprechende Nutzung beziehungsweise Bedienung entsprechender Funktionen und/oder Anwendungen als auch deren Menüführung weiter vereinfacht, insbesondere da für den Nutzer eine intuitive Nutzung beziehungsweise Bedienung in Abhängigkeit des Aufenthaltsortes in graphischer Form bereitgestellt und ermöglicht wird. Eine besonders vorteilhafte Ausgestaltung der Erfindung sieht eine unmittelbare Wiedergabe der geographische Informationen des Aufenthaltsortes und/oder Umgebung des Aufenthaltsortes aufweisenden Karte mit und/oder nach Inbetriebnahme des mobilen Endgerätes vor, vorzugsweise ohne das weitere Aktivierungseingaben seitens des mobilen Endgerätes erforderlich sind. Erfindungsgemäß wird so unmittelbar nachdem das mobile Endgerät aktiviert, dass heißt in Betriebsbereitschaft versetzt wird, beispielsweise durch Betätigung einer Taste einer Eingabeeinrichtung des mobilen Endgerätes und/oder bei mobilen Endgeräten mit in der Regel zwei relativ zueinander durch Verschwenken, Verdrehen und/oder Verschieben zwischen zwei Positionen bewegbaren Gehäuseteilen des mobilen Endgerätes, wie sogenannten "Klapphandys", durch Verschwenken, Verdrehen und/oder Verschieben der beiden Gehäuseteile zubeziehungsweise gegeneinander, seitens der Anzeigeinrichtung des mobilen Endgerätes der Aufenthaltsort in Form einer geographische Informationen des Aufenthaltsortes und/oder der Umgebung des Aufenthaltsortes aufweisenden Karte wiedergegeben, ohne dass zusätzliche Betätigungs- beziehungsweise Aktivierungseingaben seitens des mobilen Endgerätes erforderlich sind.

In einer weiteren vorteilhaften Ausgestaltung der Erfindung ist die Größe hinsichtlich des Maßstabs und/oder die Informationsdichte hinsichtlich des Detailgrads der in Form einer Karte wiedergegebenen geographischen Informationen skalierbar. Dadurch ist die erfindungsgemäße Menüführung weiter individualisierbar und an die jeweiligen Bedürfnisse beziehungsweise Interessen des Nutzers anpassbar.

Gemäß einer weiteren vorteilhaften Ausgestaltung der Erfindung wird die Größe der in Form einer Karte wiedergegebenen geographischen Informationen von und/oder mit der jeweils aktuellen Funkzelle des Mobilfunknetzes vorgegeben, in der sich das mobile Endgerät aktuell befindet. Vorteilhafterweise ist so eine automatische und an die Größe der jeweiligen Funkzelle des Mobilfunknetzes am Aufenthaltsort des mobilen Endgerätes für die Skalierung der Größe hinsichtlich des Maßstabs und die Informationsdichte hinsichtlich des Detailgrads der in Form einer Karte wiedergegebenen geographischen Informationen realisierbar. In geographischen Bereichen, in denen zur Bereitstellung und/oder Sicherstellung einer Funkversorgung Funkzellen des Mobilfunknetzes einen kleineren geographischen Bereich abdecken, beispielsweise in Städten oder dergleichen Ballungsgebieten, sind entsprechend mehr Nutzungs- und/oder Bedienmöglichkeiten für zur Verfügung stehende Funktionen und/oder Anwendungen gegeben, als dies beispielsweise in ländlichen Gebieten und/oder dergleichen weniger stark besiedelten Gebieten der Fall ist und wo dementsprechend die von Funkzellen des Mobilfunknetzes abgedeckten geographischen Bereiche größer sind. Die Größe der jeweils aktuellen Funkzelle gibt insofern ein Maß für die wiederzugebende geographische Karte in Größe hinsichtlich des Maßstabs und/oder Informationsdichte hinsichtlich des Detailgrads derselben wieder.

Gemäß einer weiteren vorteilhaften Ausgestaltung der Erfindung wird eine Veränderung des Aufenthaltsortes des mobilen Endgerätes im Mobilfunknetz in der Karte nachgeführt, vorzugsweise derart, dass zumindest der aktuelle Aufenthaltsort in der Karte angezeigt wird. Erfindungsgemäß wird so zum einen eine Bewegung des mobilen Endgerätes und damit des Nutzers im Mobilfunknetz seitens der Karte nachvollziehbar und zum anderen zumindest der jeweils aktuelle Aufenthaltsort des mobilen Endgerätes beziehungsweise des Nutzers in der Karte angezeigt. Eine entsprechende erfindungsgemäße Funktionalität ist vorteilhafterweise bei einer Stadtführung oder dergleichen Anwendungen nutzbar, bei welchen anhand der Karte ein Startpunkt und bereits ablaufende Wege und/oder Ziele beziehungsweise Teilziele erkennbar und/oder anzeigbar sind. Erfindungsgemäß erfolgt vorteilhafterweise eine entsprechend dem jeweiligen Aufenthaltsort aktualisierte Wiedergabe der geographischen Karte. Gemäß einer weiteren vorteilhaften Ausgestaltung der Erfindung werden die in Form einer Karte wiedergegebenen geographischen Informationen einer Veränderung des Aufenthaltsortes nachgeführt, vorzugsweise zumindest bei einer einen Funkzellenwechsel bedingenden Veränderung des Aufenthaltsortes des mobilen Endgerätes im Mobilfunknetz. Erfindungsgemäß ist dabei eine der Bewegung des mobilen Endgerätes nachgeführte Wiedergabe der geographischen Informationen der Karte seitens der Anzeigeeinrichtung vorgesehen.

Gemäß einer weiteren Ausgestaltung der Erfindung wird der Aufenthaltsort in der Karte zentralisiert wiedergegeben. Eine vorteilhafte Ausgestaltung der Erfindung sieht vor, dass der Aufenthaltsort in der Karte optisch unterscheidbar gegenüber sonstigen wiedergegebenen Informationen hervorgehoben wiedergegeben wird. Der seitens der Anzeigeeinrichtung des mobilen Endgerätes wiedergegebene Aufenthaltsort ist so in der Karte entweder stets an einer festen, vorzugsweise zentralisierten Position, oder sonst wie erkennbar hervorgehoben wiedergegeben, so dass für den Nutzer eine weitere Vereinfachung hinsichtlich der Nutzung beziehungsweise Bedienung bereitstellgestellt ist.

Eine weitere besonders vorteilhafte Ausgestaltung der Erfindung sieht vor, dass geographische Informationen einer Region, vorzugsweise des Versorgungsgebietes des Mobilfunknetzes, seitens einer Speichereinrichtung des mobilen Endgerätes erfasst sind und in Abhängigkeit des jeweiligen Aufenthaltsortes des mobilen Endgerätes im Mobilfunknetz die geographischen Informationen des Aufenthaltsortes und/oder der Umgebung des Aufenthaltsortes zur Wiedergabe der Karte aus der Speichereinrichtung geladen und wiedergegeben werden. Eine erfindungsgemäße Bevorratung der geographischen Informationen der Region seitens der Speichereinrichtung des mobilen Endgerätes reduziert vorteilhafterweise ansonsten über das Mobilfunknetz über Kommunikationsverbindungen auf das mobile Endgerät zu übertragende Informationen. Die Bevorratung von geographischen Informationen einer Region seitens des mobilen Endgerätes beziehungsweise einer Speichereinrichtung desselben ist insbesondere vorteilhaft für geographische Informationen, die sich nicht beziehungsweise nur selten ändern. Im Falle einer Änderung und/oder im Falle von sich ändernden geographischen Informationen können diese vorteilhafterweise über Kommunikationsverbindungen des Mobilfunknetzes auf das jeweilige mobile Endgerät übertragen werden. Zur Wiedergabe von geographischen Informationen des jeweiligen Aufenthaltsortes des mobilen Endgerätes im Mobilfunknetz brauchen so über das Mobilfunknetz vorteilhafterweise lediglich Informationen über den Aufenthaltsort des mobilen Endgerätes im Mobilfunknetz übertragen werden, welche seitens des mobilen Endgerätes dazu genutzt werden, entsprechende geographische Informationen aus der Speichereinrichtung des mobilen Endgerät zu laden und seitens der Anzeigeeinrichtung des mobilen Endgerätes wiederzugeben. Eine weitere vorteilhafte Ausgestaltung der Erfindung sieht vor, dass geographische Informationen einer Region, vorzugsweise des Versorgungsgebietes des Mobilfunknetzes, seitens einer Speichereinrichtung des Mobilfunknetzes erfasst sind und in Abhängigkeit des jeweiligen Aufenthaltsortes des mobilen Endgerätes die geographischen Informationen des Aufenthaltsortes und/oder der Umgebung des Aufenthaltsortes zur Wiedergabe der Karte über das Mobilfunknetz an das mobile Endgerät übertragen und wiedergegeben werden. Vorteilhafterweise wird eine entsprechende Übertragung und Wiedergabe für sich ändernde beziehungsweise häufig ändernde Informationen einer Region genutzt, insbesondere zur Wiedergabe der aktuellen Funkzelle in der Karte.

Gemäß einer weiteren besonders vorteilhaften Ausgestaltung der Erfindung wird seitens der Anzeigeeinrichtung als Funktion und/oder Anwendung eine Suchfunktionalität wiedergegeben und zur Verfügung gestellt, welche bei einer Nutzung der Suchfunktionalität automatisch den aktuellen Aufenthaltsort des mobilen Endgerätes im Mobilfunknetz mit in eine Suche aufnimmt. Vorteilhafterweise wird das Ergebnis einer entsprechenden Suche in Form geographischer Informationen wiedergegeben, vorzugsweise in graphischer Form, besonders bevorzugt in der seitens der Anzeigeeinrichtung wiedergegebenen geographischen Karte.

Eine weitere vorteilhafte Ausgestaltung der Erfindung sieht vor, dass einem mobilen Endgerät in dem Mobilfunknetz für Kommunikationsverbindung zur Verfügung stehende Dienste in Abhängigkeit des Aufenthaltsortes des mobilen Endgerätes im Mobilfunknetz gesteuert werden, wobei das Mobilfunknetz wenigstens ein Versorgungsgebiet mit einer aus Funkzellen aufgebauten zellularen Netzstruktur aufweist, das Versorgungsgebiet für wenigstens ein mobiles Endgerät in wenigstens ein Vorzugsgebiet und ein Restgebiet aufgeteilt wird und bei Aufenthalt des mobilen Endgerätes in dem wenigstens einen Vorzugsgebiet für Kommunikationsverbindungen eine Nutzung von wenigstens einem Dienst ermöglicht wird, welche von einer bei Aufenthalt des mobilen Endgerätes im Restgebiet für Kommunikationsverbindungen ermöglichten Nutzung von Diensten abweicht, wobei der Aufenthaltsort bei Aufenthalt in einem Vorzugsgebiet in der Karte in einer anderen graphischen Form und/oder einer anderen Farbe wiedergegeben wird, als der Aufenthaltsort bei Aufenthalt in einem Restgebiet. Die Aufteilung des Versorgungsgebietes eines Mobilfunknetzes in wenigstens ein Vorzugsgebiet und ein Restgebiet für mobile Endgeräte mit unterschiedlichen Dienstnutzungen für Kommunikationsverbindungen für das mobile Endgerät im Vorzugsgebiet und im Restgebiet ist insbesondere für eine unterschiedliche Vergebührung von Kommunikationsverbindungen eines mobilen Endgerätes nutzbar, wobei im Vorzugsgebiet vorteilhafterweise eine günstigere Vergebührung von Kommunikationsverbindungen vorgesehen ist, als im Restgebiet. Erfindungsgemäß wird dem Nutzer dabei in der geographischen Karte der Aufenthalt in einem für ihn seitens des Mobilfunknetzes vorgesehenen beziehungsweise eingerichteten Vorzugsgebiets wiedergegeben, vorzugsweise durch entsprechende graphische Wiedergabe des Vorzugsgebiets seitens der geographischen Karte. Für Nutzer ist so eine weitere Vereinfachung hinsichtlich der Nutzung beziehungsweise Bedienung gegeben.

Eine weitere vorteilhafte Ausgestaltung der Erfindung sieht vor, dass neben und/oder zu geographischen Informationen des Aufenthaltsortes und/oder der Umgebung des Aufenthaltsortes zumindest teilweise Informationen über Gegebenheiten, einen Erwerb von Waren, eine Inanspruchnahme von Dienstleistungen und/oder zu seitens des mobilen Endgerätes erfassten Kommunikationspartnern wiedergegeben werden, vorzugsweise in einer symbolischen Form, die es ermöglicht, die Gegebenheiten, den Erwerb von Waren, die Art der Waren, die Inanspruchnahme von Dienstleistungen, die Art der Dienstleistungen, die Kommunikationspartner, die Art der Kommunikationspartner und/oder die Art, die Zeit und/oder den Umfang der Kommunikation mit den Kommunikationspartnern von den geographischen Informationen, dem wiedergegebenen Aufenthaltsort und von- beziehungsweise untereinander optisch unterscheiden zu können. Erfindungsgemäß werden so neben den geographischen Informationen in der Karte weitere Informationen über Gegebenheiten, beispielsweise Hotels, Restaurants, Museen, Kinos oder dergleichen Gegebenheiten, den Erwerb von Waren, die Inanspruchnahme von Dienstleistungen sowie Informationen über Kommunikationspartner des Nutzers des mobilen Endgerätes für eine weitergehende Nutzung wiedergegeben. Vorteilhafterweise sind Informationen über Gegebenheiten, ein Erwerb von Waren, eine Inanspruchnahme von Dienstleistungen und/oder zu seitens des mobilen Endgerätes erfassten Kommunikationspartnern seitens einer Speichereinrichtung des mobilen Endgerätes erfasst und werden in Abhängigkeit des jeweiligen Aufenthaltsortes des mobilen Endgerätes die Informationen zur Wiedergabe aus der Speichereinrichtung geladen und wiedergegeben. Eine weitere Ausgestaltung der Erfindung sieht vor, dass Informationen über Gegebenheiten, einen Erwerb von Waren, eine Inanspruchnahme von Dienstleistungen und/oder zu seitens des mobilen Endgerätes erfassten Kommunikationspartnern seitens einer Speichereinrichtung des mobilen Endgerätes erfasst sind und in Abhängigkeit des jeweiligen Aufenthaltsortes des mobilen Endgerätes die Informationen zur Wiedergabe über das Mobilfunknetz an das mobile Endgerät übertragen und wiedergegeben werden.

Eine besonders bevorzugte Ausgestaltung der Erfindung sieht vor, dass die Wiedergabe der Informationen über Gegebenheiten, einen Erwerb von Waren, eine Inanspruchnahme von Dienstleistungen und/oder zu seitens des mobilen Endgerätes erfassten Kommunikationspartnern zumindest teilweise in Form von Nutzungs- und/oder Bedienmöglichkeiten zur Verfügung stehender Funktionen und/oder Anwendungen erfolgt, wobei durch eine Auswahleingabe seitens einer Eingabeeinrichtung des mobilen Endgerätes eine weitergehende Nutzung ermöglicht wird, vorzugsweise unter Nutzung wenigstens einer Verlinkung zu einem seitens des Mobilfunknetzes betriebenen Dienstleistungsportals. So können auf einfache Art und Weise seitens der geographischen Karte wiedergegebene Informationen über Gegebenheiten, einen Erwerb von Waren, eine Inanspruchnahme von Dienstleistungen und/oder zu seitens des mobilen Endgerätes erfassten Kommunikationspartnern zur Verfügung stehende ergänzende Informationen durch einfache Auswahleingabe mit entsprechenden Wiedergaben seitens der Anzeigeinrichtung des mobilen Endgerätes näher spezifiziert werden. Vorteilhafterweise kann über eine entsprechende Verlinkung eine Inanspruchnahme von Dienstleistungen und/oder der Erwerb von Waren ausgeführt, zumindest jedoch eingeleitet werden. So sind beispielsweise aufenthaltsortabhängig für den Nutzer Informationen hinsichtlich Unterhaltungsmöglichkeiten wie Kino oder dergleichen Unterhaltungsmöglichkeiten abrufbar und über eine entsprechende Auswahleingabe beispielsweise Karten für eine entsprechende Vorstellung reservierbar und/oder bestellbar und/oder die Bezahlung über das Mobilfunknetz beziehungsweise das seitens des Mobilfunknetzes betriebenen Dienstleistungsportals bezahlbar.

Gemäß einer weiteren vorteilhaften Ausgestaltung der Erfindung wird die Wiedergabe der Nutzungs- und/oder Bedienmöglichkeiten zur Verfügung stehender Funktionen und/oder Anwendungen in Abhängigkeit des Bedarfs des Anwenders des mobilen Endgerätes seitens der Anzeigeeinrichtung wiedergegeben, wobei der Bedarf vorzugsweise in Abhängigkeit von und/oder aus dem jeweiligen nutzerindividuellen Nutzungskontext bestimmt wird, besonders bevorzugt prognostizierend durch Erfassung endgeräteseitig erfolgender Funktions- und/oder Anwendungsnutzungen. Das mobile Endgerät ist dazu vorteilhafterweise in der Lage endgeräteseitig erfolgende Funktions- und/oder Anwendungsnutzungen des Nutzers zu erfassen und einander zuzuordnen, so dass das mobile Endgerät quasi selbstständig Vorlieben des Nutzers hinsichtlich der Nutzung beziehungsweise Bedienung des mobilen Endgerätes erfasst. Dadurch ist eine weitere Steigerung hinsichtlich des Maßes der Nutzerindividualisierbarkeit von Menüführungen erzielbar.

Gemäß einer weiteren vorteilhaften Ausgestaltung der Erfindung wird der Aufenthaltsort des mobilen Endgerätes im Mobilfunknetz unter Nutzung netzbasierter und/oder endgerätebasierter Lokalisierungstechnologien bestimmt, vorzugsweise anhand der Funkzelle des Mobilfunknetzes in der sich das mobile Endgerät befindet als netzbasierte Lokalisierungstechnologie und/oder mittels eines satellitengestützen Navigations- und/oder Ortungssystems, besonders bevorzugt mittels GPS (GPS: Global Positioning System), als endgerätebasierter Lokalisierungstechnologie. Durch die Kombination von netzbasierten Lokalisierungstechnologien, wie beispielsweise COO (COO: Cell Of Origin), TOA (TOA: Time Of Arrival) und dergleichen und/oder endgerätebasierten Lokalisierungstechnologien, wie beispielsweise E-OTD (E-OTD: Enhanced-Opserved Time Difference), GPS (Global Positioning System) oder dergleichen, ist eine verbesserte Bestimmung des Aufenthaltsortes des mobilen Endgerätes im Mobilfunknetz und damit eine Verbesserung hinsichtlich der Nutzerindividualisierbarkeit einer entsprechenden Wiedergabe von Nutzungs- und/oder Bedienmöglichkeiten erzielbar.

Zur Lösung der eingangs genannten Aufgabe wird mit der vorliegenden Erfindung ferner ein mobiles Endgerät zur Nutzung in einem Mobilfunknetz, vorzugsweise ein Mobilfunktelefon, mit einer Anzeigeeinrichtung zur optischen und/oder akustischen Wiedergabe von Informationen und wenigstens eine Eingabeeinrichtung zur Erfassung von Informationen, wobei seitens der Anzeigeeinrichtung Nutzungs- und/oder Bedienmöglichkeiten endgeräteseitig zur Verfügung stehender Funktionen und/oder Anwendungen als Informationen wiedergebbar sind, vorgeschlagen, welches zur Ausführung eines erfindungsgemäßen Verfahrens ausgebildet ist.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig.1: in einer schematisch perspektivischen Ansicht ein Ausführungsbeispiel eines erfindungsgemäßen mobilen Endgerätes zur Ausführung eines erfindungsgemäßen Verfahrens und
- Fig.2: in einer schematischen Draufsicht das mobile Endgerät gemäß Fig. 1 mit einem Ausführungsbeispiel einer Nutzung eines erfindungsgemäßen Verfahrens.

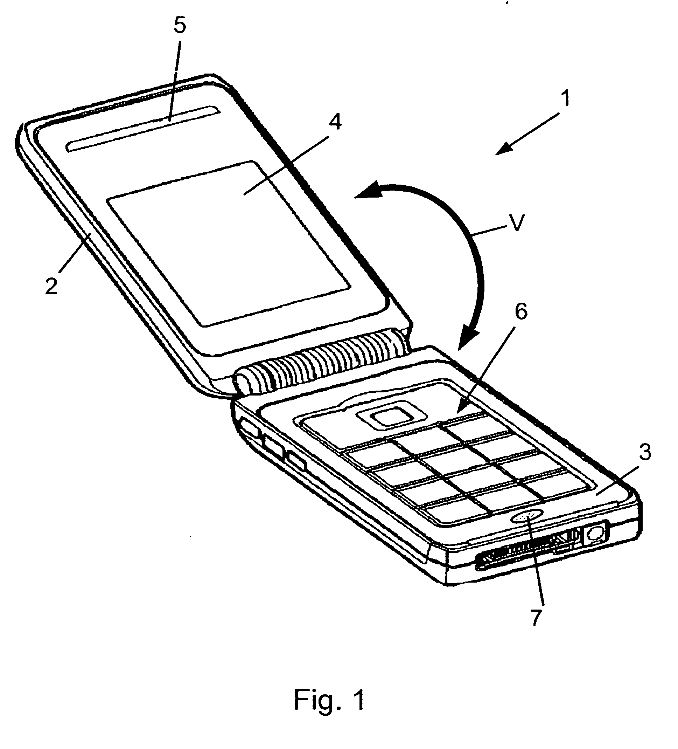

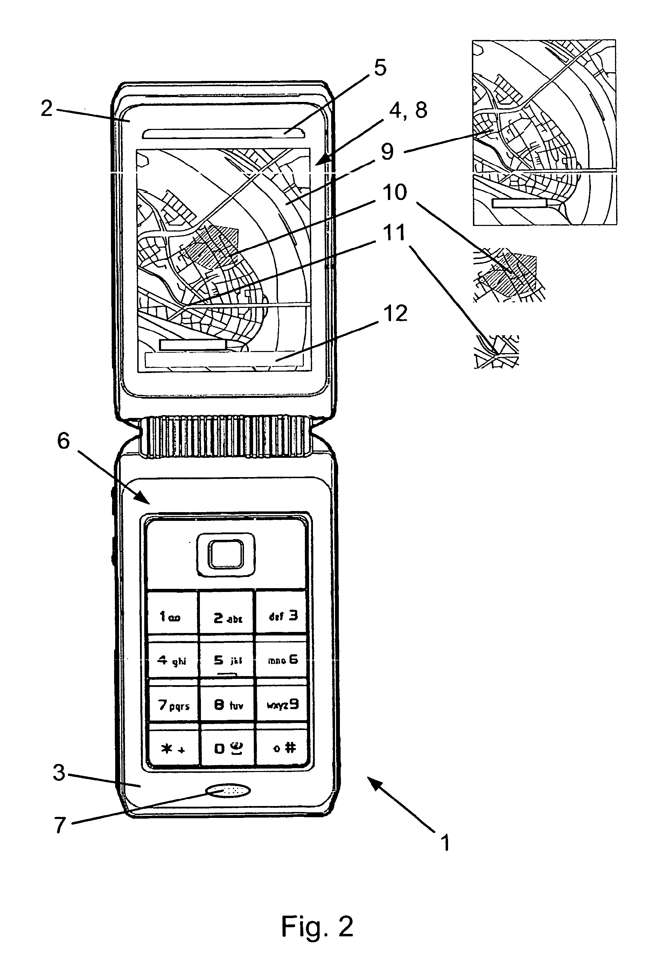

Fig. 1 und Fig. 2 zeigen ein in einem Mobilfunknetz gemäß dem GSM- und/oder UMTS- Funknetzstandard betreibbares mobiles Endgerät 1, vorliegend ein Mobilfunktelefon 1. Bei dem Mobilfunktelefon 1 handelt es sich um ein sogenanntes klappbares Mobilfunktelefon 1, welches ein aus zwei durch Verschwenken gegeneinander beziehungsweise umeinander relativ zueinander zuordbaren Gehäuseteilen 2 und 3 bestehendes Gehäuse aufweist. Die Verschwenkbarkeit der Gehäuseteile 2 und 3 gegeneinander beziehungsweise umeinander ist in Fig. 1 durch den mit V gekennzeichneten Doppelpfeil dargestellt.

Das Gehäuseteil 2 des Gehäuses des Mobilfunktelefons 1 weist auf der dem Gehäuseteil 3 im Rahmen der Verschwenkung V zugewandten Seite zur Wiedergabe von optischen Informationen ein Display 4 als Anzeigeeinrichtung 4 und zur Wiedergabe von akustischen Informationen ein Lautsprecher 5 beziehungsweise eine Hörmuschel 5 als Anzeigeeinrichtung 5 auf. Das Gehäuseteil 3 des Gehäuses des Mobilfunktelefons 1 weist auf der dem Gehäuseteil 2 im Rahmen der Verschwenkung V zugewandten Seite zur Erfassung von akustischen und/oder optischen Informationen eine mehrere Tasten umfassende Tastatur 6 als Eingabeeinrichtung 6 und zur Erfassung von akustischen Informationen in Form von akustischen Signalen ein Mikrofon 7 als Eingabeeinrichtung 7 auf.

Bei dem vorliegenden Mobilfunktelefon 1 sind durch Verschwenkung V der beiden Gehäuseteile 2 und 3 zueinander vorliegend zwei Funktionszustände des Mobilfunktelefons 1 einnehmbar. In dem in Fig. 1 und Fig. 2 dargestellten, als aufgeklappt zu bezeichnenden Funktionszustand des Mobilfunktelefons 1 sind das in dem Gehäuseteil 2 angeordnete Display 4 und der Lautsprecher 5 beziehungsweise die Hörmuschel 5 sowie die in dem Gehäuseteil 3 angeordnete Tastatur 6 und das Mikrofon 7 für den Nutzer des Mobilfunktelefons 1 zur Nutzung zugänglich. In einem hier nicht explizit dargestellten, als zugeklappt zu bezeichnenden Funktionszustand des Mobilfunktelefons 1 sind das in dem Gehäuseteil 2 angeordnete Display 4 und der Lautsprecher 5 beziehungsweise die Hörmuschel 5 sowie die in dem Gehäuseteil 3 angeordnete Tastatur 6 und das Mikrofon 7 für den Nutzer nicht zugänglich. Im zugeklappten Zustand befindet sich das Mobilfunktelefon 1 im sogenannten Standby-Modus (Bereitschaftsmodus), in welchem zumindest das Display 4 des Mobilfunktelefons 1 deaktiviert beziehungsweise in einem Bereitschaftsmodus (Standby-Modus) versetzt wird.

Fig. 2 zeigt ein erfindungsgemäßes Ausführungsbeispiel eines Funktionszustandes des Mobilfunktelefons 1 im aufgeklappten Zustand. Dabei wird das Mobilfunktelefon 1 vorliegend mit dem Aufklappen durch Verschwenken der Gehäuseteile 2 und 3 gegeneinander in Betrieb genommen. Unmittelbar mit und/oder nach entsprechender Inbetriebnahme des Mobilfunktelefons 1 wird in Abhängigkeit des Aufenthaltsortes des Mobilfunktelefons 1 im Mobilfunknetz der Aufenthaltsort 11 seitens des Displays 4 in Form einer geographische Informationen des Aufenthaltsortes 11 und/oder der Umgebung des Aufenthaltsortes 11 aufweisenden Karte 9 wiedergegeben. Die Wiedergabe der geographische Informationen des Aufenthaltsortes 11 und/oder der Umgebung des Aufenthaltsortes 11 aufweisenden Karte 9 erfolgt dabei ohne das weitere Aktivierungseingaben seitens der Eingabeeinrichtungen 6 und/oder 7 des Mobilfunktelefons 1 erforderlich wären, insbesondere ohne Betätigung einer Taste der Tastatur 6 oder eine Spracheingabe über das Mikrofon 7.

Wie anhand der in Fig. 2 rechts dargestellten Einzelelemente der seitens des Displays 4 wiedergegebenen Gesamtansicht 8 erkennbar, wird vorliegend der Aufenthaltsort 11 des Mobilfunktelefons 1 im Mobilfunknetz 1 in einer geographische Informationen aufweisenden Karte 9 wiedergegeben. Der Aufenthaltsort 11 wird dabei vorliegend als Punkt in einer gegenüber den graphischen Informationen der Karte 9 anderen Farbe dem Nutzer seitens des Displays 4 entsprechend signalisiert. Bei Bewegung des Nutzers und dementsprechend des Mobilfunktelefons 1 im Mobilfunknetz wird die aktuelle Position des Aufenthaltsortes des Mobilfunktelefons 1 entsprechend in der seitens des Displays 4 wiedergegebenen geographischen Karte nachgeführt. Dabei kann - je nach gewünschter Betriebsart - die geographische Karte 9 kontinuierlich und/oder mit Verlassen des aktuellen Aufenthaltspunktes aus dem in der jeweiligen Gesamtansicht 8 jeweils angezeigten geographischen Karte 9 nachgeführt werden.

Bei dem in Fig. 2 dargestellten Ausführungsbeispiel ist das Versorgungsgebiet des Mobilfunknetzes für das Mobilfunktelefon 1 in ein Vorzugsgebiet 10 und ein außerhalb des Vorzugsgebietes 10 liegendes Restgebiet aufgeteilt. Bei Aufenthalt des Mobilfunktelefons 1 in dem Vorzugsgebiet 10 stehen dem Nutzer des Mobilfunktelefons 1 dabei Dienstnutzungen für Kommunikationsverbindungen zur Verfügung, welche von Dienstnutzungen für Kommunikationsverbindungen des Mobilfunktelefons 1 im Restgebiet abweichen. Vorliegend ist dabei im Vorzugsgebiet 10 insbesondere eine kostengünstigere Vergebührung von Kommunikationsverbindungen im Mobilfunknetz gegeben. Sowohl das Vorzugsgebiet 10 als auch der Aufenthalt des Mobilfunktelefons 1 mit einem Aufenthaltsort 11 im Vorzugsgebiet 10 werden vorliegend seitens der Gesamtansicht 8 in dem Display 4 des Mobilfunktelefons 1 wiedergegeben, zumindest wenn seitens des Displays 4 ein entsprechender Ausschnitt der geographischen Karte 9 wiedergegeben wird.

Wie anhand des Displays 4 gemäß Fig. 2 zu erkennen ist, ist im unteren Bereich der Gesamtansicht 8 vorliegend ein Anzeigebereich 12 eine Suchfunktionalität gegeben, welche bei einer Nutzung der Suchfunktionalität automatisch den aktuellen Aufenthaltsort 11 des Mobilfunktelefons 1 im Mobilfunknetz mit in eine Suche aufnimmt. Dabei wird vorteilhafterweise das Ergebnis einer Suche in Form geographischer Informationen seitens des Displays 4 graphisch wiedergegeben.

Seitens des Displays 4 werden vorliegend in Abhängigkeit des Aufenthaltsortes 11 des Mobilfunktelefons 1 im Mobilfunknetz dem Nutzer des Mobilfunktelefons 1 am jeweiligen Aufenthaltsort 11 beziehungsweise dessen geographischer Umgebung Nutzung- und/oder Bedienmöglichkeiten für endgeräteseitig zur Verfügung stehender Funktionen und/oder Anwendungen wiedergegeben, welche die Menüführung von beziehungsweise durch Funktionen und/oder Anwendungen des Mobilfunktelefons 1 vereinfacht und nutzerindividualisiert. Bei dem in Fig. 2 dargestellten Ausführungsbeispiel werden dem Nutzer des Mobilfunktelefons 1 beispielsweise neben seinem Vorzugsgebiet 10 in der Nähe seines Aufenthaltsortes befindliche Restaurants oder dergleichen Gegebenheiten in symbolischer Form graphisch wiedergegeben.

Die in den Fig. der Zeichnung dargestellten Ausführungsbeispiele der Erfindung dienen lediglich der Erläuterung der Erfindung und sind für diese nicht beschränkend.

### Bezugszeichenliste

- 1: mobiles Endgerät/Mobilfunktelefon
- 2: Gehäuseteil (mobiles Endgerät (1))
- 3: Gehäuseteil (mobiles Endgerät (1))
- 4: Anzeigeeinrichtung/Display (Gehäuseteil (2))
- 5: Lautsprecher/Hörmuschel (Gehäuseteil (2))
- 6: Eingabeeinrichtung/Tastatur (Gehäuseteil (3))
- 7: Mikrofon (Gehäuseteil (3))
- 8: Gesamtansicht (Anzeigeeinrichtung (4))
- 9: geographische Karte (Gesamtansicht (9))
- 10: Vorzugsgebiet (Gesamtansicht (9))
- 11: Aufenthaltsort (Gesamtansicht (9))
- 12: Anzeigebereich Suchfunktionalität (Gesamtansicht (9))
- V: Verschwenkung

## Patentansprüche

1. Verfahren zum Betreiben eines in einem Mobilfunknetz nutzbaren, eine Anzeigeeinrichtung (4, 5) zur optischen und/oder akustischen Wiedergabe von Informationen und wenigstens eine Eingabeeinrichtung (6, 7) zur Erfassung von Informationen aufweisenden mobilen Endgerätes (1), wobei
- seitens der Anzeigeeinrichtung (4, 5) Nutzungs- und/oder Bedienmöglichkeiten endgeräteseitig zur Verfügung stehender Funktionen und/oder Anwendungen als Informationen wiedergegeben werden, von denen zumindest ein Teil seitens der Anzeigeeinrichtung (4) in Abhängigkeit von dem Aufenthaltsort (11) des mobilen Endgerätes (1) im Mobilfunknetz wiedergegeben werden und
- der Aufenthaltsort (11) des mobilen Endgerätes (1) im Mobilfunknetz seitens der Anzeigeeinrichtung (4) in Form einer geographische Informationen des Aufenthaltsortes (11) und/oder der Umgebung des Aufenthaltsortes (11) aufweisenden Karte (9) wiedergegeben wird,
**dadurch gekennzeichnet, dass**
eine unmittelbare Wiedergabe der geographischen Informationen des Aufenthaltsorters (11) und/oder der Umgebung des Aufenthaltsortes (11) aufweisenden Karte (9) mit und/oder nach Inbetriebnahme des mobilen Endgerätes erfolgt und die Größe der in Form einer Karte (9) wiedergegebenen geographischen Informationen von der jeweils aktuellen Funkzelle des Mobilfunknetzes vorgegeben wird, in der sich das mobile Endgerät (1) befindet.

2. Verfahren nach Anspruch 1, **dadurch gekennzeichnet, dass** wenigstens eine Funktion und/oder Anwendung in Abhängigkeit von dem Aufenthaltsort (11) des mobilen Endgerätes (1) im Mobilfunknetz zur Verfügung gestellt wird.

3. Verfahren nach Anspruch 1 oder 2, **dadurch gekennzeichnet, dass** die Größe hinsichtlich des Maßstabes und/oder die Informationsdichte hinsichtlich des Detailgrads der in Form einer Karte (9) wiedergegebenen geographischen Informationen skalierbar ist.

4. Verfahren nach einem der Ansprüche 1 bis 3, **dadurch gekennzeichnet, dass** eine Veränderung des Aufenthaltsortes (11) in der Karte (9) derart nachgeführt wird, dass zumindest der aktuelle Aufenthaltsort (11) in der Karte (9) angezeigt wird.

5. Verfahren nach einem der Ansprüche 1 bis 4, **dadurch gekennzeichnet, dass** die in Form einer Karte (9) wiedergegebenen geographischen Informationen bei einer Veränderung des Aufenthaltsortes nachgeführt werden.

6. Verfahren nach einem der Ansprüche 1 bis 5, **dadurch gekennzeichnet, dass** die in Form einer Karte (9) wiedergegebenen geographischen Informationen bei einer einen Funkzellenwechsel bedingenden Veränderung des Aufenthaltsortes nachgeführt werden.

7. Verfahren nach einem der Ansprüche 1 bis 6, **dadurch gekennzeichnet, dass** der Aufenthaltsort (11) in der Karte (9) zentralisiert und/oder optisch unterscheidbar gegenüber sonstigen wiedergegebenen Informationen hervorgehoben wiedergegeben wird.

8. Verfahren nach einem der Ansprüche 1 bis 7, **dadurch gekennzeichnet, dass** geographische Informationen einer Region, vorzugsweise des Versorgungsgebietes des Mobilfunknetzes, seitens einer Speichereinrichtung des mobilen Endgerätes (1) erfasst sind und in Abhängigkeit des jeweiligen Aufenthaltsortes (11) des mobilen Endgerätes (1) die geographischen Informationen des Aufenthaltsortes (11) und/oder der Umgebung des Aufenthaltsortes (11) zur Wiedergabe in der Karte (9) aus der Speichereinrichtung geladen und wiedergegeben werden.

9. Verfahren nach einem der Ansprüche 1 bis 8, **dadurch gekennzeichnet, dass** geographische Informationen einer Region, vorzugsweise des Versorgungsgebietes des Mobilfunknetzes, seitens einer Speichereinrichtung des Mobilfunknetzes erfasst sind und in Abhängigkeit des jeweiligen Aufenthaltsortes (11) des mobilen Endgerätes (1) die geographischen Informationen des Aufenthaltsortes (11) und/oder der Umgebung des Aufenthaltsortes (11) zur Wiedergabe in der Karte (9) über das Mobilfunknetz an das mobile Endgerät (1) übertragen und wiedergegeben werden.

10. Verfahren nach einem der Ansprüche 1 bis 9, **dadurch gekennzeichnet, dass** seitens der Anzeigeeinrichtung (4) als Funktion und/oder Anwendung eine Suchfunktionalität (12) wiedergegeben und zur Verfügung gestellt wird, welche bei einer Nutzung der Suchfunktionalität (12) automatisch den aktuellen Aufenthaltsort (11) des mobilen Endgerätes (1) im Mobilfunknetz mit in eine Suche aufnimmt.

11. Verfahren nach einem der Ansprüche 1 bis 10, **dadurch gekennzeichnet, dass** einem mobilen Endgerät (1) in dem Mobilfunknetz für Kommunikationsverbindungen zur Verfügung stehende Dienste in Abhängigkeit des Aufenthaltsortes (11) des mobilen Endgerätes (1) im Mobilfunknetz gesteuert werden, wobei das Mobilfunknetz wenigstens ein Versorgungsgebiet mit einer aus Funkzellen aufgebauten zellularen Netzstruktur aufweist, das Versorgungsgebiet für wenigstens ein mobiles Endgerät (1) in wenigstens ein Vorzugsgebiet (10) und ein Restgebiet aufgeteilt wird und bei Aufenthalt des mobilen Endgerätes (1) in dem wenigstens einen Vorzugsgebiet (10) für Kommunikationsverbindungen eine Nutzung von wenigstens einem Dienst ermöglicht wird, welche von einer bei Aufenthalt des mobilen Endgerätes (1) im Restgebiet für Kommunikationsverbindungen ermöglichten Nutzung von Diensten abweicht, wobei der Aufenthaltsort (11) bei Aufenthalt in einem Vorzugsgebiet (10) in der Karte in einer anderen graphischen Form und/oder einer anderen Farbe wiedergegeben wird, als der Aufenthaltsort (11) bei Aufenthalt in einem Restgebiet.

12. Verfahren nach einem der Ansprüche 1 bis 11, **dadurch gekennzeichnet, dass** neben und/oder zu geographischen Informationen des Aufenthaltsortes (11) und/oder der Umgebung des Aufenthaltsortes (11) zumindest teilweise Informationen über Gegebenheiten, einen Erwerb von Waren, eine Inanspruchnahme von Dienstleistungen und/oder zu seitens des mobilen Endgerätes (1) erfassten Kommunikationspartnern wiedergegeben werden, vorzugsweise in einer symbolischen Form, die es ermöglicht, die Gegebenheiten, den Erwerb von Waren, die Art der Waren, die Inanspruchnahme von Dienstleistungen, die Art der Dienstleistungen, die Kommunikationspartner, die Art der Kommunikationspartner und/oder die Zeit und/oder den Umfang der Kommunikation mit den Kommunikationspartnern von den geographischen Informationen, dem wiedergegebenen Aufenthaltsort (11) von- bzw. untereinander optisch unterscheiden zu können.

13. Verfahren nach Anspruch 12, **dadurch gekennzeichnet, dass** Informationen über Gegebenheiten, einen Erwerb von Waren, eine Inanspruchnahme von Dienstleistungen und/oder seitens des mobilen Endgerätes (1) erfassten Kommunikationspartnern seitens einer Speichereinrichtung des mobilen Endgerätes (1) erfasst sind und in Abhängigkeit des jeweiligen Aufenthaltsortes (11) des mobilen Endgerätes (1) die Informationen zur Wiedergabe aus der Speichereinrichtung geladen und wiedergegeben werden.

14. Verfahren nach Anspruch 12 oder Anspruch 13, **dadurch gekennzeichnet, dass** Informationen über Gegebenheiten, einen Erwerb von Waren, eine Inanspruchnahme von Dienstleistungen und/oder seitens des mobilen Endgerätes (1) erfassten Kommunikationspartnern seitens einer Speichereinrichtung des Mobilfunknetzes erfasst sind und in Abhängigkeit des jeweiligen Aufenthaltsortes (11) des mobilen Endgerätes (1) die Informationen zur Wiedergabe über das Mobilfunknetz an das mobile Endgerät (1) übertragen und wiedergegeben werden.

15. Verfahren nach einem der Ansprüche 12 bis 14, **dadurch gekennzeichnet, dass** die Wiedergabe der Informationen über Gegebenheiten, einen Erwerb von Waren, eine Inanspruchnahme von Dienstleistungen und/oder zu seitens des mobilen Endgerätes (1) erfassten Kommunikationspartnern zumindest teilweise in Form von Nutzungs- und/oder Bedienmöglichkeiten zur Verfügung stehender Funktionen und/oder Anwendungen erfolgt, wobei durch eine Auswahleingabe seitens einer Eingabeeinrichtung des mobilen Endgerätes (1) eine weitergehende Nutzung ermöglicht wird, vorzugsweise unter Nutzung wenigstens einer Verlinkung zu einem seitens des Mobilfunknetzes betriebenen Dienstleistungsportals.

16. Verfahren nach einem der Ansprüche 1 bis 15, **dadurch gekennzeichnet, dass** die Wiedergabe der Nutzungs- und/oder Bedienmöglichkeiten zur Verfügung stehender Funktionen und/oder Anwendungen in Abhängigkeit des Bedarfs des Anwenders des mobilen Endgerätes (1) seitens der Anzeigeeinrichtung (4, 5) wiedergegeben wird, wobei der Bedarf in Abhängigkeit von und/oder aus dem jeweiligen nutzerindividuellen Nutzungskontext bestimmt wird, vorzugsweise prognostizierend durch Erfassung endgeräteseitig erfolgender Funktions- und/oder Anwendungsnutzungen.

17. Verfahren nach einem der Ansprüche 1 bis 16, **dadurch gekennzeichnet, dass** der Aufenthaltsort (11) des mobilen Endgerätes (1) im Mobilfunknetz unter Nutzung netzbasierter und/oder endgerätebasierter Lokalisierungstechnologien bestimmt wird, vorzugsweise anhand der Funkzelle des Mobilfunknetzes in der sich das mobile Endgerät (1) befindet als netzbasierte Lokalisierungstechnologie und/oder mittels eines satellitengestützten Navigations- und/oder Ortungssystems, besonders bevorzugt mittels GPS, als endgerätebasierter Lokalisierungstechnologie.

18. Mobiles Endgerät (1) zur Nutzung in einem Mobilfunknetz mit einer Anzeigeeinrichtung (4, 5) zur optischen und/oder akustischen Wiedergabe von Informationen, und wenigstens eines Eingabeeinrichtung (6, 7) zur Erfassung von Informationen, wobei seitens der Anzeigeeinrichtung (4) Nutzungs- und/oder Bedienmöglichkeiten endgeräteseitig zur Verfügung stehender Funktionen und/oder Anwendungen als Informationen wiedergebbar sind, **dadurch gekennzeichnet, dass** dieses zur Ausführung eines Verfahrens nach einem der Ansprüche 1 bis 17 ausgebildet ist.

## Claims

1. A method for operating a mobile terminal (1) which can be used in a mobile network and which comprises a display device (4, 5) for the optical and/or acoustic reproduction of information and at least one input device (6, 7) for gathering information, wherein
- the display device (4, 5) reproduces utilization and/or operating options of functions and/or applications which have been made available by the terminal as information of which at least a part will be reproduced by the display device (4) in dependence on the local position (11) of the mobile terminal (1) in the mobile network and
- the display device (4) will reproduce the local position (11) of the mobile terminal (1) in the mobile network in form of a map (9) comprising geographic information of the local position (11) and/or the environment of the local position (11),
**characterized in that**
an immediate reproduction of the map (9) comprising the geographic information of the local position (11) and/or the environment of the local position (11) will take place upon and/or after starting the mobile terminal and the size of the geographic information reproduced in form of a map (9) will be predetermined by the respectively actual radio cell of the mobile network in which the mobile terminal (1) is situated.

2. A method according to claim 1, **characterized in that** at least one function and/or application is made available in dependence on the local position (11) of the mobile terminal (1) in the mobile network.

3. A method according to claim 1 or 2, **characterized in that** the size with respect to the scale and/or the information density with respect to the degree of details of the geographic information reproduced in form of a map (9) can be scaled.

4. A method according to one of the claims 1 through 3, **characterized in that** a change of the local position (11) is traced in the map (9) such that at least the current local position (11) is displayed on the map (9).

5. A method according to one of the claims 1 through 4, **characterized in that** the geographic information reproduced in form of a map (9) is actualized in case of a change of the local position.

6. A method according to one of the claims 1 through 5, **characterized in that** the geographic information reproduced in form of a map (9) is actualized in case of a change of the local position which entails a change of the radio cell.

7. A method according to one of the claims 1 through 6, **characterized in that** the local position (11) is reproduced and emphasized in the map (9) in a centralized and/or optically distinguishable manner with respect to other reproduced information.

8. A method according to one of the claims 1 through 7, **characterized in that** the geographic information of a region, preferably of the service area of the mobile network, is gathered by a memorizing device of the mobile terminal (1) and the geographic information of the local position (11) and/or the environment of the local position (11) is extracted from the memorizing device for reproduction in the map (9) and reproduced in dependence on the respective local position (11) of the mobile terminal (1).

9. A method according to one of the claims 1 through 8, **characterized in that** the geographic information of a region, preferably of the service area of the mobile network, is gathered by a memorizing device of the mobile network and the geographic information of the local position (11) and/or the environment of the local position (11) is transmitted to the mobile terminal (1) via the mobile network for reproduction in the map (9) and reproduced in dependence on the respective local position (11) of the mobile terminal (1).

10. A method according to one of the claims 1 through 9, **characterized in that** the display device (4) will reproduce and make available a search functionality (12) as function and/or application which will automatically integrate the current local position (11) of the mobile terminal (1) in the mobile network into a research if the search functionality (12) is used.

11. A method according to one of the claims 1 through 10, **characterized in that** services for communication connections made available to a mobile terminal (1) in the mobile network are controlled in dependence on the local position (11) of the mobile terminal (1) in the mobile network, wherein the mobile network comprises at least one service area having a cellular network structure composed of radio cells, the service area of at least one mobile terminal (1) is subdivided into at least one preferred area (10) and one residual area and if the mobile terminal (1) is present in the at least one preferred area (10), a utilization of at least one service for communication connections will be enabled, which utilization differs from a utilization of services for communication connections which is rendered possible if the mobile terminal (1) is present in the residual area, wherein in case of the presence in a preferred area (10) the local position (11) will be reproduced in the map (9) in another graphic form and/or in a different colour with respect to the local position (11) in case of the presence in a residual area.

12. A method according to one of the claims 1 through 11, **characterized in that** apart from and/or in addition to geographic information of the local position (11) and/or the environment of the local position (11), information about conditions, an acquisition of goods, a utilization of services and/or communication partners registered by the mobile terminal (1) is at least partially reproduced, preferably in a symbolic form which permits to optically distinguish from each other the conditions, the acquisition of goods, the type of goods, the utilization of services, the kind of services, the communication partners, the kind of the communication partners and/or the time and/or the extend of the communication with the communication partners, on the one hand, and the geographic information and the reproduced local position (11), on the other hand.

13. A method according to claim 12, **characterized in that** information about conditions, an acquisition of goods, a utilization of services and/or communication partners registered by the mobile terminal (1) is gathered by a memorizing device of the mobile terminal (1) and the information will be extracted from the memorizing device for reproduction and reproduced in dependence on the respective local position (11) of the mobile terminal.

14. A method according to claim 12 or claim 13, **characterized in that** information about conditions, an acquisition of goods, a utilization of services and/or communication partners registered by the mobile terminal (1) is gathered by a memorizing device of the mobile network and the information will be transmitted to the mobile terminal (1) via the mobile network for reproduction and reproduced in dependence on the respective local position (11) of the mobile terminal (1).

15. A method according to one of the claims 12 through 14, **characterized in that** the reproduction of the information about conditions, an acquisition of goods, a utilization of services and/or communication partners registered by the mobile terminal (1) is at least partially realized in form of utilization and/or operating options of functions and/or applications being available, wherein a more global utilization will be enabled by a selection input by means of an input device of the mobile terminal (1), preferably using at least one linkage to a service portal operated by the mobile network.

16. A method according to one of the claims 1 through 15, **characterized in that** the reproduction of the utilization and/or operating options of functions and/or applications being available is realized by the display device (4, 5) in dependence on the needs of the user of the mobile terminal (1), wherein the needs are determined in dependence on and/or on the base of the respective user individual utilization context, preferably in a prognosticating way by gathering utilizations of functions and/or applications realized by the terminal.

17. A method according to one of the claims 1 through 16, **characterized in that** the local position (11) of the mobile terminal (1) in the mobile network is determined by using network based and/or terminal based localization technologies, preferably by means of the radio cell of the mobile network in which the mobile terminal (1) is present as network based localization technology and/or by means of a satellite based navigation and/or localization system, more preferably by means of GPS, as terminal based localization technology.

18. A mobile terminal (1) for the utilization in a mobile network, comprising a display device (4, 5) for the optical and/or acoustic reproduction of information and at least one input device (6, 7) for gathering information, wherein the display device (4) is able to reproduce utilization and/or operating options of functions and/or applications made available by the terminal as information, **characterized in that** this one is designed for carrying out a method according to one of the claims 1 through 17.

## Revendications

1. Procédé d'actionnement d'un terminal mobile (1) utile dans un réseau mobile et comprenant un dispositif d'affichage (4, 5) pour la reproduction optique et/ou acoustique des informations et au moins un dispositif d'entrée (6, 7) pour saisir des informations, dans lequel
- le dispositif d'affichage (4, 5) reproduit des options d'utilisation et/ou de commande des fonctions et/ou des applications mises à la disposition par le terminal mobile en tant que des informations, dont au moins une partie est reproduite par le dispositif d'affichage (4) en fonction de la position locale (11) du terminal mobile (1) dans le réseau mobile et
- le dispositif d'affichage (4) reproduit la position locale (11) du terminal mobile (1) dans le réseau mobile sous forme d'une carte (9) comprenant des informations géographiques de la position locale (11) et/ou de l'environnement de la position locale (11),
**caractérisé en ce qu'**
une reproduction immédiate de la carte (9) comprenant des informations géographiques de la position locale (11) et/ou de l'environnement de la position locale (11) se fait avec et/ou après la mise en marche du terminal mobile et la grandeur des informations géographiques reproduites sous forme d'une carte (9) est prédéterminée par la cellule radio respectivement actuelle du réseau mobile dans laquelle se trouve le terminal mobile (1).

2. Procédé selon la revendication 1, **caractérisé en ce qu'**au moins une fonction et/ou une application est mise à la disposition en fonction de la position locale (11) du terminal mobile (1) dans le réseau mobile.

3. Procédé selon la revendication 1 ou la revendication 2, **caractérisé en ce qu'**on peut cadrer la grandeur par rapport à l'échelle et/ou la densité d'informations par rapport au degré de détails des informations géographiques reproduites sous forme d'une carte (9).

4. Procédé selon l'une des revendications 1 à 3, **caractérisé en ce qu'**un changement de la position locale (11) est poursuivi sur la carte (9) de sorte qu'au moins la position locale actuelle (11) sera montrée sur la carte (9).

5. Procédé selon l'une des revendications 1 à 4, **caractérisé en ce que** les informations géographiques reproduites sous forme d'une carte (9) sont actualisées au cas d'un changement de la position locale.

6. Procédé selon l'une des revendications 1 à 5, **caractérisé en ce que** les informations géographiques reproduites sous forme d'une carte (9) sont actualisées au cas d'un changement de la position locale entraînant un changement de cellule radio.

7. Procédé selon l'une des revendications 1 à 6, **caractérisé en ce que** la position locale (11) est reproduite et mise en relief sur la carte (9) d'une manière centralisée et/ou de façon à ce qu'on puisse la distinguer optiquement par rapport à d'autres informations reproduites.

8. Procédé selon l'une des revendications 1 à 7, **caractérisé en ce que** des informations géographiques d'une région, de préférence de la zone de service du réseau mobile, sont enregistrées par un dispositif de mémorisation du terminal mobile (1) et les informations géographiques de la position locale (11) et/ou de l'environnement de la position locale (11) sont extraites du dispositif de mémorisation pour les reproduire dans la carte (9) et sont reproduites en fonction de la position locale (11) respective du terminal mobile (1).

9. Procédé selon l'une des revendications 1 à 8, **caractérisé en ce que** des informations géographiques d'une région, de préférence de la zone de service du réseau mobile, sont enregistrées par un dispositif de mémorisation du réseau mobile et les informations géographique de la position locale (11) et/ou de l'environnement de la position locale (11) sont transmises au terminal mobile (1) via le réseau mobile pour les reproduire dans la carte (9) et sont reproduites en fonction de la position locale (11) respective du terminal mobile (1).

10. Procédé selon l'une des revendications 1 à 9, **caractérisé en ce que** le dispositif d'affichage (4) reproduit et met à la disposition une fonctionnalité de recherche (12) en tant que fonction et/ou application, qui intègre automatiquement la position locale (11) actuelle du terminal mobile (1) dans le réseau mobile à une recherche si la fonctionnalité de recherche (12) est utilisée.

11. Procédé selon l'une des revendications 1 à 10, **caractérisé en ce que** des services pour des connexions de communication mis à la disposition à un terminal mobile (1) dans le réseau mobile sont commandées en fonction de la position locale (11) du terminal mobile (1) dans le réseau mobile, le réseau mobile comprenant au moins une zone de service ayant une structure de réseau cellulaire composée de cellules radio, la zone de service d'au moins un terminal mobile (1) étant divisée en une zone de préférence (10) et une zone résiduelle et une utilisation d'au moins un service pour des connexions de communication étant rendue possible si le terminal mobile (1) se trouve dans l'au moins une zone de préférence (10), l'utilisation étant différente d'une utilisation des services pour des connexions de communication rendue possible au cas d'un séjour du terminal mobile (1) dans la zone résiduelle, la position locale (11) étant reproduite sur la carte sous une forme graphique différente et/ou en une autre couleur au cas d'un séjour dans une zone de préférence (10) que la position locale (11) au cas d'un séjour dans une zone résiduelle.

12. Procédé selon l'une des revendications 1 à 11, **caractérisé en ce qu'**à part de et/ou en plus d'informations géographiques de la position locale (11) et/ou de l'environnement de la position locale (11), des informations par rapport à des circonstances, une acquisition de marchandises, une utilisation de services et/ou des partenaires de communication enregistrés par le terminal mobile (1) sont reproduites, de préférence sous une forme symbolique qui permet de distinguer de manière optique les uns des autres les circonstances, l'acquisition de marchandises, la nature des marchandises, l'utilisation de services, la nature des services, les partenaires de communication, la sorte des partenaires de communication et/ou la durée et/ou l'importance de la communication avec les partenaires de communication, d'une part, et des informations géographiques et la position locale (11) reproduite, d'autre part.

13. Procédé selon la revendication 12, **caractérisé en ce que** des informations par rapport à des circonstances, une acquisition de marchandises, une utilisation de services et/ou des partenaires de communication enregistrés par le terminal mobile (1) sont enregistrées par un dispositif de mémorisation du terminal mobile (1) et les informations sont extraites du dispositif de mémorisation pour la reproduction et sont reproduites en fonction de la position locale (11) respective du terminal mobile (1).

14. Procédé selon la revendication 12 ou la revendication 13, **caractérisé en ce que** des informations par rapport à des circonstances, une acquisition de marchandises, une utilisation de services et/ou des partenaires de communication enregistrés par le terminal mobile (1) sont enregistrées par un dispositif de mémorisation du réseau mobile et les informations sont transmises au terminal mobile (1) via le réseau mobile pour la reproduction et sont reproduites en fonction de la position locale (11) respective du terminal mobile (1).

15. Procédé selon l'une des revendications 12 à 14, **caractérisé en ce que** la reproduction des informations par rapport à des circonstances, une acquisition de marchandises, une utilisation de services et/ou des partenaires de communication enregistrés par le terminal mobile (1) se fait au moins partiellement sous forme des options d'utilisation et/ou de commande des fonctions et/ou des applications mises à la disposition, une utilisation plus globale étant rendue possible par une entrée de sélection par moyen d'un dispositif d'entrée du terminal mobile (1), de préférence en utilisant au moins un lien à un portail de services opéré par le réseau mobile.

16. Procédé selon l'une des revendications 1 à 15, **caractérisé en ce que** la reproduction des options d'utilisation et/ou de commande des fonctions et/ou des applications mises à la disposition se fait par moyen du dispositif d'affichage (4, 5) en fonction des besoins de l'usager du terminal mobile (1), les besoins étant déterminés en fonction du et/ou sur la base du contexte d'utilisation respectif et individuel de l'usager, de préférence de manière prévoyante par l'enregistrement des utilisations de fonctions et/ou des applications réalisées par le terminal.

17. Procédé selon l'une des revendications 1 à 16, **caractérisé en ce que** la position locale (11) du terminal mobile (1) dans le réseau mobile est déterminée en utilisant des technologies de localisation basées sur le réseau et/ou basées sur le terminal, de préférence par moyen de la cellule radio du réseau mobile dans laquelle se trouve le terminal mobile (1) comme technologie de localisation basée sur le réseau et/ou par moyen d'un système de navigation et/ou de localisation par satellite, de préférence particulière par moyen de GPS, comme technologie de localisation basée sur le terminal.

18. Terminal mobile (1) pour l'utilisation dans un réseau mobile et comprenant un dispositif d'affichage (4, 5) pour la reproduction optique et/ou acoustique des informations et au moins un dispositif d'entrée (6, 7) pour saisir des informations, le dispositif d'affichage (4) pouvant reproduire des options d'utilisation et/ou de commande des fonctions et/ou des applications mises à la disposition par le terminal en tant que des informations, **caractérisé en ce que** celui-ci est configuré pour réaliser un procédé selon l'une des revendications 1 à 17.
